# EUROPÄISCHE PATENTSCHRIFT

(11) **EP 2 593 348 B1**
(45) Veröffentlichungstag und Bekanntmachung des Hinweises auf die Patenterteilung: **18.02.2015**
(21) Anmeldenummer: 11788355.3
(22) Anmeldetag: 11.07.2011
(51) Int. Cl.: B62D 7/18

(54) **LENKACHSE**
STEERING AXLE
ESSIEU DIRECTEUR

(30) Priorität: 15.07.2010 DE 102010036417
(43) Veröffentlichungstag der Anmeldung: 22.05.2013
(73) Patentinhaber: BPW Bergische Achsen KG, 51674 Wiehl (DE)
(72) Erfinder: KLAAS, Thomas, 51580 Reichshof (DE)
(74) Vertreter: Bungartz Christophersen Partnerschaft mbB Patentanwälte
(86) Internationale Anmeldenummer: PCT/DE2011/075158
(87) Internationale Veröffentlichungsnummer: WO 2012/022333

(56) Entgegenhaltungen:
- FR-A- 475 517
- GB-A- 2 167 023
- US-A- 2 896 983
- US-A1- 2008 164 670

## Beschreibung

Die Erfindung betrifft eine Lenkachse mit einem um einen Lenkbolzen schwenkbar an einer Achsfaust gelagerten, mindestens ein Fahrzeugrad drehbar aufnehmenden Achsschenkelträger, wobei die Achsfaust sowohl nach oben wie nach unten mit Lenkbolzenabschnitten versehen ist, und auf jedem der beiden Lenkbolzenabschnitte jeweils ein Gelenkauge des Achsschenkelträgers schwenkgelagert ist.

Eine Lenkachse mit diesen Merkmalen ist aus der WO 98/45158 bekannt. Da die Schwenklagerung des Achsschenkelträgers doppelt ist, und hierzu ein erster Lenkbolzenabschnitt nach oben, und ein zweiter Lenkbolzenabschnitt nach unten aus der Achsfaust herausragt, ist eine Montage und Demontage des kompletten Achsschenkelträgers nur möglich, wenn zunächst der Lenkbolzen aus der Achsfaust herausgezogen wird. Zu diesem Zweck sind an Lenkbolzen und Achsfaust korrespondierende Keilflächen vorgesehen, die sich bei entsprechendem axialen Druck trennen, woraufhin der Lenkbolzen zu einer Seite hin aus der Achsfaust herausziehbar ist. GB 2 167 023 A beschreibt eine Lenkachse gemäß dem Oberbegriff des Anspruchs 1.

Ziel der Erfindung ist die Möglichkeit einer Montage und Demontage des kompletten Achsschenkelträgers, ohne zunächst den Lenkbolzen entfernen zu müssen.

Zur Lösung wird bei einer Lenkachse mit den eingangs angegebenen Merkmalen vorgeschlagen, dass zumindest eines der beiden Gelenkaugen des Achsschenkelträgers an einer den entsprechenden Lenkbolzenabschnitt vollumfänglich umschließenden Buchse ausgebildet ist, welche in eine einstückig an dem Achsschenkelträger ausgebildete Buchsenaufnahme in Bolzenlängsrichtung einsetzbar ist, wobei die Buchsenaufnahme mit einer bezüglich der Bolzenlängsrichtung radialen Öffnung versehen ist, deren Öffnungsweite größer als der Durchmesser des Lenkbolzenabschnitts ist.

Ermöglicht wird auf diese Weise eine Montage und Demontage des kompletten Achsschenkelträgers, ohne zunächst den Lenkbolzen entfernen zu müssen. Auf diese Weise wird es zum Beispiel möglich, den Lenkbolzen einstückig an der Achsfaust auszubilden, etwa durch gemeinsames Schmieden der Achsfaust und der zapfenförmig nach oben und nach unten hervorstehenden Lenkbolzenabschnitte. Hierdurch lassen sich die Herstellkosten der Achsfaust verringern, insbesondere, wenn diese bereits einstückiger Bestandteil eines durchgehenden Achskörpers ist, an dem an beiden Enden jeweils eine derartige Achsfaust einschließlich angeformter Lenkbolzenabschnitte vorhanden ist.

Mit einer ersten Ausgestaltung wird vorgeschlagen, dass die Buchse in Richtung zur Achsfaust hin in die Buchsenaufnahme einsetzbar ist. Bevorzugt ist hierbei, wenn sich die eingesetzte Buchse mit einem an ihrem außen liegenden Ende angeformten, radial erweiterten Bund gegen eine die Buchsenaufnahme umgebende Stirnfläche abstützt. Diese Stirnfläche befindet sich vorzugsweise an einer radialen Erweiterung der Buchsenaufnahme, die zur Verstärkung der Buchsenaufnahme als geschlossener Ring geformt ist.

Mit einer weiteren Ausgestaltung wird vorgeschlagen, dass auch das zweite Gelenkauge an einer den entsprechenden zweiten Lenkbolzenabschnitt vollumfänglich umschließenden Buchse ausgebildet ist, welche in eine einstückig an dem Achsschenkelträger ausgebildete zweite Buchsenaufnahme in Bolzenlängsrichtung einsetzbar ist, und in eingesetztem Zustand auf ihrem gesamten Umfang von der zweiten Buchsenaufnahme umschlossen ist.

Vorzugsweise gilt auch für die zweite Buchse, dass sie sich, sobald sie in die zweite Buchsenaufnahme eingesetzt ist, mit einem an ihrem außen liegenden Ende angeformten, radial erweiterten Bund gegen eine die zweite Buchsenaufnahme umgebende Stirnfläche abstützt.

Weitere Vorteile und Einzelheiten werden nachfolgend anhand eines Ausführungsbeispiels einer Lenkachse beschrieben. Auf der Zeichnung zeigen:
- Fig. 1: in perspektivischer Darstellung das eine Ende einer Lenkachse, insbesondere einer Lenkachse eines Fahrzeuganhängers;
- Fig. 2: die Lenkachse nach der Entnahme zweier Buchsen;
- Fig. 3: aus anderer Perspektive die Lenkachse nach Entnahme der Buchsen und in leicht gekippter Stellung des Achsschenkelträgers;
- Fig. 4: die Lenkachse nach stärkerem Kippen des Achsschenkelträgers;
- Fig. 5: die Lenkachse bei vollständig von der Achsfaust gelöstem Achsschenkelträger;
- Fig. 6: einen Schnitt durch den Achsschenkelträger bei einer ersten Ausführungsform und
- Fig. 7: einen Schnitt durch den Achsschenkelträger bei einer zweiten Ausführungsform.

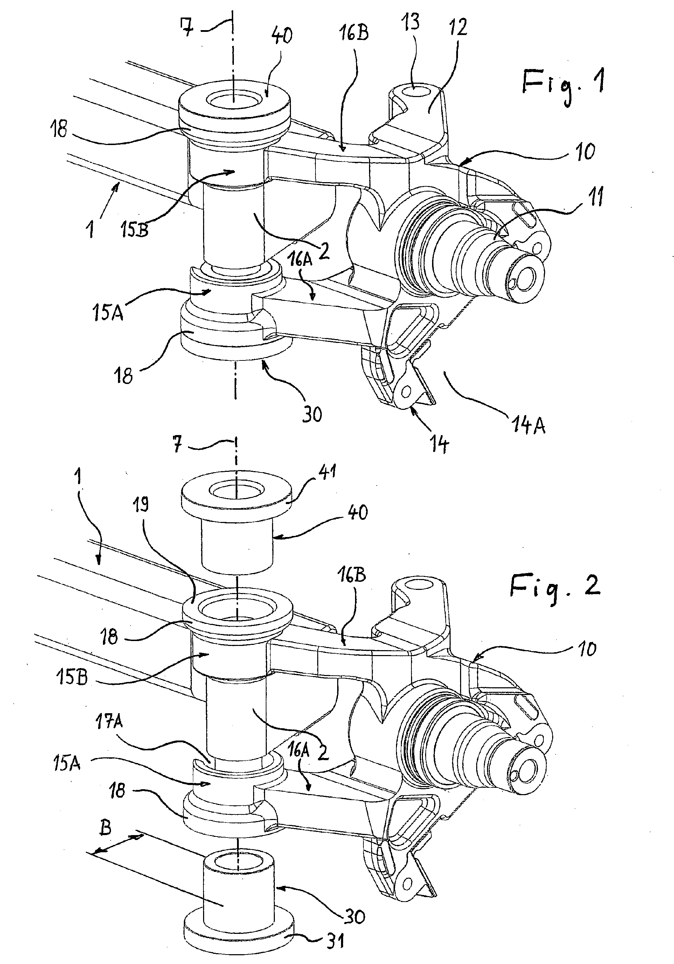

Die Fig. 1 zeigt eine Lenkachse in betriebsfertigem Zustand. Diese setzt sich aus einem Achskörper 1 zusammen, der hier als von der einen zur anderen Fahrzeugseite durchgehendes Achsrohr gestaltet ist, das an seinen beiden Enden jeweils mit schwenkbar gelagerten Elementen der Lenkachse versehen ist. Auf der Zeichnung ist jeweils das eine Achsende mit den dort schwenkbar angelenkten Elementen wiedergegeben.

Im Bereich seiner beiden Enden ist der Achskörper 1 als Achsfaust 2 gestaltet, die, wie dargestellt, in Bezug auf den gestreckten Teil des Achskörpers 1 an einem kurzen, abgewinkelten Abschnitt ausgebildet sein kann. Die Achsfaust 2 trägt den Lenkbolzen 5 der Lenkachse, der sich hier aus einem von der Achsfaust 2 nach unten ragenden ersten Lenkbolzenabschnitt 6A, und einem von der Achsfaust 2 nach oben ragenden, zweiten Lenkbolzenabschnitt 6B zusammensetzt. Die beiden Lenkbolzenabschnitte 6A, 6B sind jeweils als Zapfen gestaltet. Um die Herstellkosten gering zu halten, kann es sich bei beiden Lenkbolzenabschnitten 6A, 6B um geschmiedete Elemente handeln, die bei der Fertigung des Achskörpers 1 oder der Achsfaust 2 im selben Schmiedeprozess mit angeformt werden. Dies ermöglicht insbesondere eine einstückige Gestaltung der Baugruppe Achsfaust 2 und den beiden Abschnitten des Lenkbolzens 5.

Der Lenkbolzen 5 definiert die vertikale Schwenkachse für einen fahrzeugaußen mit einem Achsschenkel 11 versehenen Achsschenkelträger 10. Hierbei nimmt der Achsschenkel 11 die Wälzlagerung für das Fahrzeugrad und die Bremsscheibe bzw. Bremstrommel auf.

Der vorzugsweise als Schmiedeteil gefertigte Achsschenkelträger 10 ist ferner einstückig mit einem Arm 12 versehen, an dessen Ende sich ein Gelenkauge 13 für die Spurstange der Lenkachse befindet.

Ferner ist einstückiger Bestandteil des Achsschenkelträgers 10 ein Bremsträger 14 einer Schwimmsattel-Scheibenbremse. Am Bremsträger 14 ist ein Belagschacht 14A ausgebildet, der den einen der beiden Bremsbeläge der Scheibenbremse aufnimmt.

Für die Schwenklagerung gegenüber der Achsfaust 2 sind an dem Achsschenkelträger 10 ein unterer Anlenkarm 16A und ein oberer Anlenkarm 16B angeformt. Die Enden der beiden Anlenkarme 16A, 16B sind jeweils als ringförmig gestaltete Buchsenaufnahmen 15A bzw. 15B gestaltet die daher ebenfalls einstückiger Bestandteil des Achsschenkelträgers 10 sind. Die Buchsenaufnahmen 15A, 15B stellen im Folgenden noch näher erläuterte Gelenkaugen dar, welche die schwenkbewegliche Verbindung zu den jeweiligen Lenkbolzenabschnitten 6A, 6B aufnehmen. Für die Funktion als Schwenkgelenk sind die Buchsenaufnahmen 15A, 15B jeweils als vergrößertes Auge mit einer Durchgangsbohrung gestaltet. Allerdings ist zumindest eine der beiden Buchsenaufnahmen, z.B. die untere Buchsenaufnahme 15A, über ihren Umfang nicht vollständig geschlossen, sondern sie ist zu einer Seite hin mit einer Öffnung 17A versehen. Die Öffnung 17A erstreckt sich nur über eine Höhe h, die Teil der Gesamthöhe H der Buchsenaufnahme 15A ist.

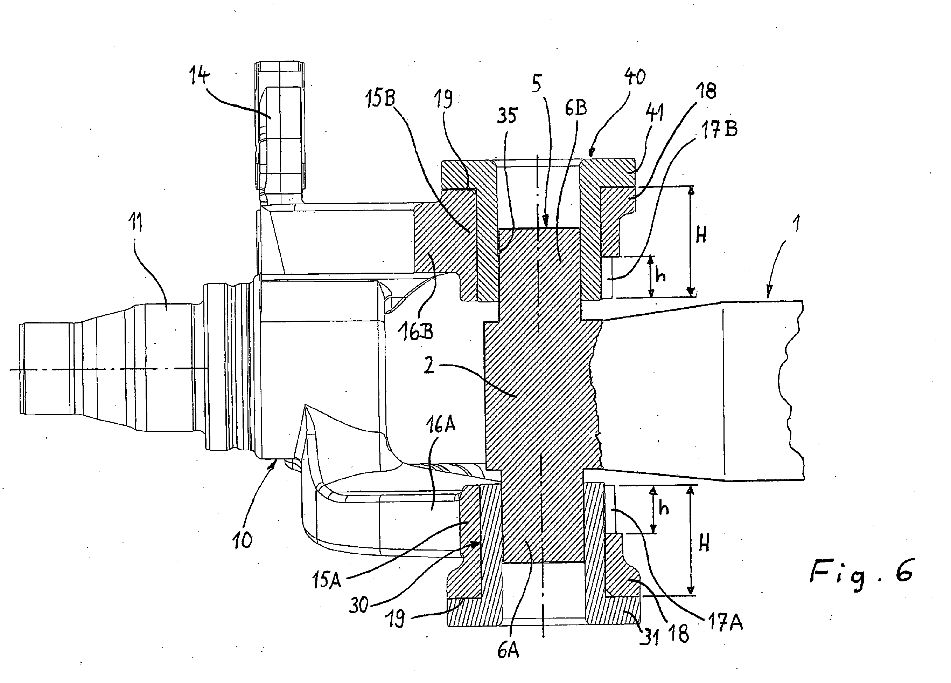

Die andere, hier die obere Buchsenaufnahme 15B kann ebenfalls mit einer seitlichen Öffnung 17B versehen sein. Diese Öffnung 17B, die sich ebenfalls über eine Höhe h erstrecken kann, ist dann oberhalb und in Fluchtung zu der Öffnung 17A der anderen Buchsenaufnahme 15A angeordnet. Eine solche Ausführungsform ist in Fig. 6 in einem Schnitt durch die Schwenkachsenebene dargestellt.

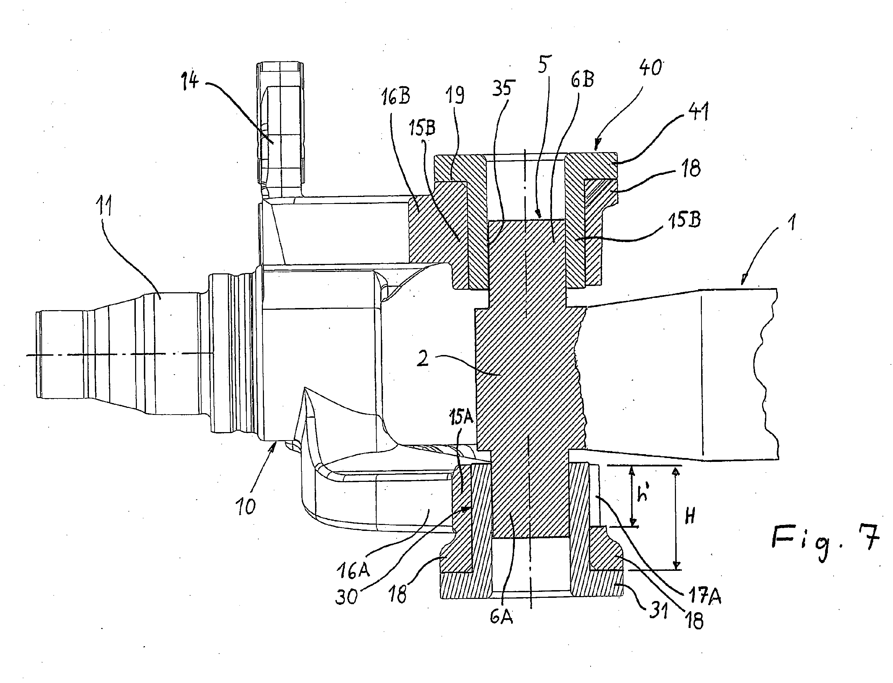

Alternativ kann bei der anderen, hier der oberen Buchsenaufnahme 15B eine der Öffnung 17A vergleichbare seitliche Öffnung fehlen. In diesem Fall muss die Öffnung 17A eine größere Höhe h' aufweisen, die aber immer noch geringer als die Gesamthöhe H der Buchsenaufnahme ist. Eine solche Ausführungsform ist in Fig. 7 in einem Schnitt durch die Schwenkachsenebene dargestellt.

In die untere Buchsenaufnahme 15A ist eine Buchse 30, und in die obere Buchsenaufnahme 15B eine Buchse 40 jeweils in Bolzenlängsrichtung 7 einsetzbar. Die beiden Buchsen 30, 40 können, wie die Zeichnung erkennen lässt, identisch gestaltet sein. Ebenso ist es möglich sie unterschiedlich zu gestalten, um ein Vertauschen der beiden Buchsen 30, 40 auszuschließen.

Die Buchsen 30, 40 können nach außen vollständig verschlossen sein, so dass kein Schmutz und keine Feuchtigkeit an die in der Buchse angeordneten Lagerflächen 35 gelangt. An der Innenseite der Buchsen 30, 40 befinden sich im Bereich der nicht näher dargestellten Lagerflächen 35 ein Gleit- oder Wälzlager. Die Buchsen 30, 40 können zur Erzielung eines Rückstelleffekts bei Auslenkung auch als Stahl-Gummi-Stahl-Buchsen gestaltet sein.

Die eine Buchse 30 ist in Richtung zur Achsfaust 2 hin passgenau in die untere Buchsenaufnahme 15A, und die andere Buchse 40, ebenfalls in Richtung zur Achsfaust 2 hin, passgenau in die andere Buchsenaufnahme 15B einsetzbar.

In eingesetztem Zustand stützen sich die Buchsen 30, 40 mit einem an ihrem außen liegenden Ende angeformten, radial erweiterten Bund 31 bzw. 41 gegen eine radial erweiterte Stirnfläche 19 der Buchsenaufnahme 15A bzw. 15B ab, wodurch die Längsbewegung der Buchse 30, 40 beim Einsetzen begrenzt wird.

Die Stirnfläche 19 ist jeweils als vollständige, d. h. geschlossene Ringfläche gestaltet, da sie sich an einem verdickten und damit die Festigkeit erhöhenden Bund 18 befindet, mit dem jede Buchsenaufnahme 15A, 15B versehen ist. Dieser Bund 18 ist ringförmig geschlossen. Dies gilt für beide Buchsenaufnahmen 15A, 15B, da auch bei vorhandener seitlicher Öffnung 17A bzw. 17B diese in Längsrichtung 7 von nur begrenzter Länge h, h' ist, und zumindest nicht den Bund 18 erfasst. Durch den so geschlossenen Bund 18 wird eine ausreichende Festigkeit der infolge der Öffnung 17a, 17B im Prinzip geschwächten Buchsenaufnahme 15A, 15B gegenüber Umfangskräften erreicht.

Der Lenkbolzenabschnitt 6A ist von solcher Länge, dass er im Einbauzustand zwar in die Buchsenaufnahme 15A hinein ragt, jedoch nicht bis zu dem verstärkenden Bund 18 reicht.

Der besondere Vorteil der Lenkachse besteht darin, dass sich der Achsschenkelträger 10 abnehmen, d. h. demontieren lässt, auch ohne dass hierzu der Lenkbolzen 5 oder einer seiner beiden Lenkbolzenabschnitte 6A, 6B entfernt werden müsste.

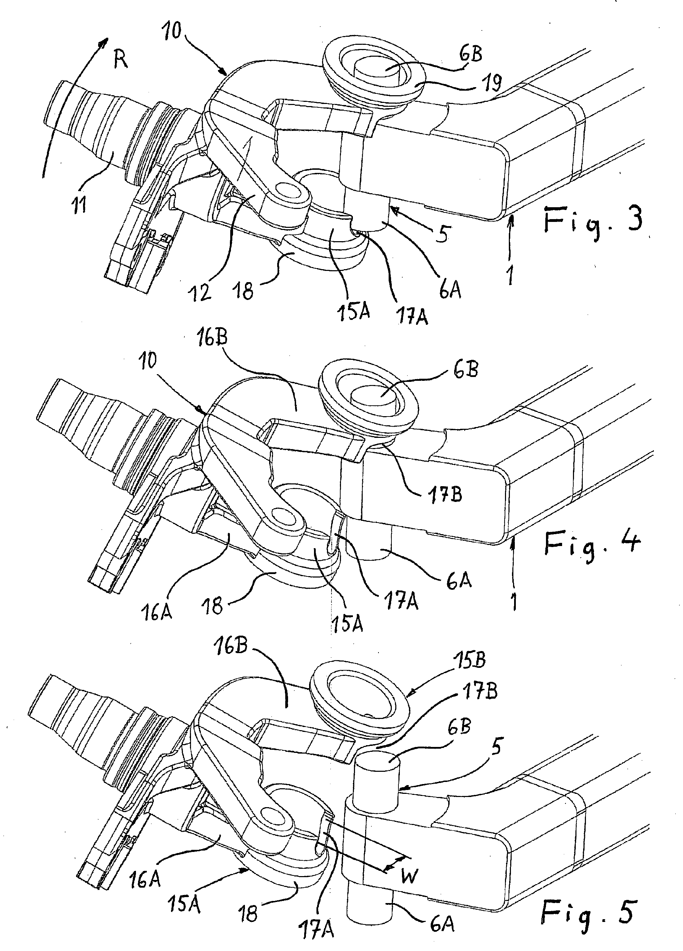

Dies wird erreicht, indem zumindest die Buchsenaufnahme 15A nicht über ihren gesamten Umfang geschlossen ist, sondern mit der bezüglich der Bolzenlängsrichtung 7 radialen Öffnung 17A der Höhe h' (Fig. 7) versehen ist. Die Öffnungsweite W (Fig. 5) der Öffnung 17A ist geringer als die entsprechende Breite B der Buchse 30. Sie ist ferner größer als der Durchmesser des entsprechenden Lenkbolzenabschnittes 6A. Aufgrund dieser Ausgestaltung lässt sich die Demontage des Achsschenkelträgers 10 wie folgt durchführen:

Zunächst werden gemäß Fig. 2 durch axiales Herausziehen beide Buchsen 30, 40 entfernt. Üblicherweise befinden sich innen in den Buchsen 30, 40 die Gleit- oder Wälzlager der Lenkachse, welche daher zusammen und zugleich mit den Buchsen 30, 40 entfernt werden.

Durch Entfernen der unteren Buchse 30 kommt die seitliche Öffnung 17A der Buchsenaufnahme 15A gegenüber dem Lenkbolzenabschnitt 6A frei. Dies ermöglicht gemäß Fig. 3 und 4, durch Verschwenken des Achsschenkelträgers 10 in Schwenkrichtung R die untere Buchsenaufnahme 15A nach außen, bezogen auf die Achsfaust 2, wegzuziehen, wobei der Lenkbolzenabschnitt 6A nicht im Wege steht, sondern er durch die Öffnung 17A, deren Weite W größer als der Durchmesser dieses Lenkbolzenabschnitts 6A ist, hinaustreten kann. Ist dies gemäß Fig. 4 erreicht, lässt sich sodann der gesamte Achsschenkelträger 10 vertikal, d.h. im wesentlichen in Richtung des Lenkbolzens 5, bewegen. Aufgrund dieser Bewegung kommt auch der andere Lenkbolzenabschnitt 6B aus der entsprechenden Buchsenaufnahme 15B vollständig frei, wie in Fig. 5 wiedergegeben.

Noch einfacher ist die geschilderte Demontage, wenn gemäß Fig. 6 auch die andere Buchsenaufnahme 15B mit einer seitlichen Öffnung 17B versehen ist.

Weiter von Vorteil ist, wenn sich der Achsschenkelträger 10 nach Entfernen der Buchsen 30, 40 zunächst auf die Achsfaust 2 absenken lässt. Denn in diesem Fall lässt sich die notwendige Höhe h' der Öffnung 17A reduzieren. Eine weitere Reduzierung kann erfolgen, wenn auch die gegenüberliegende Buchsenaufnahme 15B die Öffnung 17B (Fig. 6) aufweist. Vor dem Absenken des Achsschenkelträgers 10 muss dann allerdings die Öffnung 17B gegenüber der Achsfaust 2 ausgerichtet werden, so dass gemäß den Fign. 3 und 4 deren Öffnungsseite über die Achsfaust 2 greifen kann. Die zwei Öffnungen 17A und 17B können, müssen aber nicht bzgl. ihrer Winkellage fluchten, wenn die Weite der Öffnung 17B deutlich weiter ist, als die Breite der Faust 2.

### Bezugszeichenliste

- 1: Achskörper
- 2: Achsfaust
- 5: Lenkbolzen
- 6A: Lenkbolzenabschnitt
- 6B: Lenkbolzenabschnitt
- 7: Bolzenlängsrichtung
- 10: Achsschenkelträger
- 11: Achsschenkel
- 12: Arm
- 13: Auge
- 14: Bremsträger
- 14A: Belagschacht für Bremsbelag
- 15A: Buchsenaufnahme
- 15B: Buchsenaufnahme
- 16A: Anlenkarm
- 16B: Anlenkarm
- 17A: Öffnung
- 17B: Öffnung
- 18: Bund
- 19: Stirnfläche
- 30: Buchse
- 31: Bund
- 35: Lagerflächen
- 40: Buchse
- 41: Bund
- B: Breite
- H: Gesamthöhe
- h: Höhe der Öffnung
- h': Höhe der Öffnung
- R: Schwenkrichtung
- W: Weite

## Patentansprüche

1. Lenkachse mit einem um einen Lenkbolzen (5) schwenkbar an einer Achsfaust (2) gelagerten, mindestens ein Fahrzeugrad drehbar aufnehmenden Achsschenkelträger (10), wobei die Achsfaust (2) sowohl nach oben wie nach unten mit Lenkbolzenabschnitten (6A, 6B) versehen ist, und auf jedem der beiden Lenkbolzenabschnitte (6A, 6B) jeweils ein Gelenkauge des Achsschenkelträgers (10) schwenkgelagert ist, wobei
zumindest eines der beiden Gelenkaugen des Achsschenkelträgers (10) an einer den entsprechenden Lenkbolzenabschnitt (6A) vollumfänglich umschließenden Buchse (30) ausgebildet ist, welche in eine einstückig an dem Achsschenkelträger (10) ausgebildete Buchsenaufnahme (15A) in Bolzenlängsrichtung (7) einsetzbar ist, **dadurch gekennzeichnet, dass** die Buchsenaufnahme (15A) mit einer bezüglich der Bolzenlängsrichtung (7) radialen Öffnung (17A) versehen ist, deren Öffnungsweite (W) größer als der Durchmesser des Lenkbolzenabschnitts (6A) ist.

2. Lenkachse nach Anspruch 1, **dadurch gekennzeichnet, dass** die Buchse (30) in Richtung zur Achsfaust (2) hin in die Buchsenaufnahme (15A) einsetzbar ist.

3. Lenkachse nach Anspruch 2, **dadurch gekennzeichnet, dass** sich die eingesetzte Buchse (30) mit einem an ihrem außen liegenden Ende angeformten, radial erweiterten Bund (31) gegen eine die Buchsenaufnahme (15A) umgebende Stirnfläche (19) abstützt.

4. Lenkachse nach Anspruch 3, **dadurch gekennzeichnet, dass** die Stirnfläche (19) eine geschlossene Ringfläche ist, die sich an einem radial erweiterten Bund (18) der Buchsenaufnahme (15A) befindet.

5. Lenkachse nach Anspruch 4, **dadurch gekennzeichnet, dass** der Bund (18) der Buchsenaufnahme (15A) als geschlossener Ring gestaltet ist.

6. Lenkachse nach einem der vorangehenden Ansprüche, **dadurch gekennzeichnet, dass** auch das zweite Gelenkauge an einer den entsprechenden zweiten Lenkbolzenabschnitt (6B) vollumfänglich umschließenden Buchse (40) ausgebildet ist, welche in eine einstückig an dem Achsschenkelträger (10) ausgebildete zweite Buchsenaufnahme (15B) in Bolzenlängsrichtung (7) einsetzbar ist, und in eingesetztem Zustand auf ihrem gesamten Umfang von der zweiten Buchsenaufnahme (15B) umschlossen ist.

7. Lenkachse nach Anspruch 6, **dadurch gekennzeichnet, dass** sich die eingesetzte Buchse (40) mit einem an ihrem außen liegenden Ende angeformten, radial erweiterten Bund (41) gegen eine die zweite Buchsenaufnahme (15B) umgebende Stirnfläche (19) abstützt.

## Claims

1. Steering axle with a steering-swivel carrier (10) which is mounted on an axle stub (2) so as to be pivotable about a steering pin (5) and rotatably holds at least one vehicle wheel, wherein the axle stub (2) is provided both upwards and downwards with steering pin sections (6A, 6B), and a respective joint eye of the steering-swivel carrier (10) is pivotably mounted on each of the two steering pin sections (6A, 6B), wherein at least one of the two joint eyes of the steering-swivel carrier (10) is formed on a bush (30) which surrounds the corresponding steering pin section (6A) around the entire circumference thereof and is insertable in the pin longitudinal direction (7) into a bush receptacle (15A) formed integrally on the steering-swivel carrier (10), **characterized in that** the bush receptacle (15A) is provided with an opening (17A) which is radial with respect to the pin longitudinal direction (7) and the opening width (W) of which is larger than the diameter of the steering pin section (6A) .

2. Steering axle according to Claim 1, **characterized in that** the bush (30) is insertable into the bush receptacle (15A) in the direction towards the axle stub (2) .

3. Steering axle according to Claim 2, **characterized in that** the inserted bush (30) is supported by a radially expanded collar (31), which is integrally formed at the outer end thereof, against an end surface (19) surrounding the bush receptacle (15A).

4. Steering axle according to Claim 3, **characterized in that** the end surface (19) is a closed annular surface which is located on a radially expanded collar (18) of the bush receptacle (15A).

5. Steering axle according to Claim 4, **characterized in that** the collar (18) of the bush receptacle (15A) is designed as a closed ring.

6. Steering axle according to one of the preceding claims, **characterized in that** the second joint eye is also formed on a bush (40) which surrounds the corresponding second steering pin section (6B) about the entire circumference thereof and is insertable in the pin longitudinal direction (7) into a second bush receptacle (15B) formed integrally on the steering-swivel carrier (10), and, in the inserted state is surrounded on the entire circumference thereof by the second bush receptacle (15B).

7. Steering axle according to Claim 6, **characterized in that** the inserted bush (40) is supported by a radially expanded collar (41), which is integrally formed at the outer end thereof, against an end surface (19) surrounding the second bush receptacle (15B).

## Revendications

1. Essieu directeur comprenant un support de fusée d'essieu (10) supporté de manière à pouvoir pivoter autour d'un axe de direction (5) sur un tourillon d'essieu (2), recevant de manière rotative au moins une roue du véhicule, le tourillon d'essieu (2) étant pourvu vers le haut comme vers le bas de sections d'axe de direction (6A, 6B) et une rotule du support de fusée d'essieu (10) étant à chaque fois supportée de manière pivotante sur chacune des deux sections d'axe de direction (6A, 6B),
au moins l'une des deux rotules du support de fusée d'essieu (10) étant réalisée au niveau d'une douille (30) entourant sur toute la périphérie la section d'axe de direction correspondante (6A), laquelle douille peut être insérée dans un logement de douille (15A) réalisé d'une seule pièce au niveau du support de fusée d'essieu (10) dans la direction longitudinale de l'axe (7), **caractérisé en ce que**
le logement de douille (15A) est pourvu d'une ouverture (17A) radiale par rapport à la direction longitudinale de l'axe (7), dont la largeur d'ouverture (W) est supérieure au diamètre de la section d'axe de direction (6A).

2. Essieu directeur selon la revendication 1, **caractérisé en ce que** la douille (30) peut être insérée dans la direction du tourillon d'essieu (2) dans le logement de douille (15A).

3. Essieu directeur selon la revendication 2, **caractérisé en ce que** la douille insérée (30) s'appuie avec un épaulement (31) élargi radialement, formé au niveau de son extrémité située à l'extérieur, contre une face frontale (19) entourant le logement de douille (15A).

4. Essieu directeur selon la revendication 3, **caractérisé en ce que** la face frontale (19) est une face annulaire fermée qui se trouve au niveau d'un épaulement (18) élargi radialement du logement de douille (15A).

5. Essieu directeur selon la revendication 4, **caractérisé en ce que** l'épaulement (18) du logement de douille (15A) est réalisé sous forme de bague fermée.

6. Essieu directeur selon l'une quelconque des revendications précédentes, **caractérisé en ce que** la deuxième rotule est également réalisée au niveau d'une douille (40) entourant sur toute la périphérie la deuxième section d'axe de direction correspondante (6B), laquelle douille peut être insérée dans un deuxième logement de douille (15B) réalisé d'une seule pièce au niveau du support de fusée d'essieu (10) dans la direction longitudinale de l'axe (7), et est entourée sur toute sa périphérie, dans l'état inséré, par le deuxième logement de douille (15B).

7. Essieu directeur selon la revendication 6, **caractérisé en ce que** la douille insérée (40) s'appuie avec un épaulement (41) élargi radialement, formé au niveau de son extrémité située à l'extérieur, contre une face frontale (19) entourant le deuxième logement de douille (15B).
